# EUROPEAN PATENT APPLICATION

(11) **EP 2 157 793 A1**
(43) Date of publication of application: **24.02.2010**
(21) Application number: 08166160.5
(22) Date of filing: 08.10.2008
(51) Int. Cl.: H04N 7/173

(54) **Method and system for providing supplementary content to the user of a stored-media-content device**

(30) Priority: 22.08.2008 US 197121
(71) Applicant: Ensequence, Inc., Portland OR 97204 (US)
(72) Inventor: Harrison, Dalen Joel, Portland, OR 97210 (US)
(74) Representative: Wilding, Frances Ward

(57) **Abstract**

A method and system for providing supplementary content to the user of a stored-media-content device is presented whereby the supplementary content is filtered at least in part based on the inventory of media content accessible to the device. The system includes a program operable on a media player to generate a request for supplementary content responsive to a selection by a user of one or more of available media content stored on or accessible to the media player. A filter module is operable on the supplementary content generated responsive to the request to create a filtered subset of the supplementary content. The filter module is further operable to create the filtered subset in consideration of the available media content stored on or accessible to the media player. The subset of supplementary content is then presented to the user at the media player.

## Description

### FIELD OF THE INVENTION

This invention relates to information technology, and more particularly to methods and systems for providing and personalizing relevant and non-redundant supplemental information with respect to data already stored at devices such as media players and the like.

### BACKGROUND OF THE INVENTION

Modern media devices provide the capability to experience media content anywhere at any time. Early audio systems used vinyl records and delicate turntables, while early televisions were heavy and relied on complex antenna or cable systems. The development of sophisticated digital processing techniques, including the compressive encoding of video, audio and graphics content, along with commensurate improvements in electronics processing and storage technologies, have allowed hardware memory devices to take the place of older analog storage media and transmission systems and have allowed miniaturized processors and circuitry to replace bulky analog circuits and components. Today's technologies can incorporate processing, storage, communication and playout into a unit smaller than a deck of playing cards yet capable of storing and playing thousands of audio selections or scores of video segments, while providing two-way data and voice communication and access to Internet content via a full-color touch-sensitive display screen.

The inevitable consequence of this technological advance is the availability of far more content than any single user can absorb. Fifty years ago there were three television networks, while today YouTube® provides access to millions of amateur video clips, and the Apple iTunes® Store offers access to more than 8 million downloadable songs, thousands of movies, and hundreds of television series.

Just as technology created the glut of media content, technology has offered solutions to assist a user in accessing suitable selections. For example, U.S. Patent 6,986,154 by Price et al. describes a system that utilizes a user profile maintained at the user's location, whereby a profiling agent compares parameters from a media source and parameters from the user profile to select media content that matches the user's preferences. Similarly, the system described in U.S. Patent 6,944,585 by Pawson utilizes user preference input to satisfy a request for digital content by selecting content at a broadcast source. In another prior art example, U.S. Patent 6,314,568 by Ochiai et al. describes a system for organizing and presenting media content broadcast to and stored on a local device, where the sequence of presentation of media segments is determined by comparison with the viewer's preference data. U.S. Patent 7,305,691 by Cristofalo extends these concepts to cover the situation where the user is away from home, by storing user preference data in a central server from which the preference data can be extracted for use in filtering content. However, each of these systems known in the prior art has the disadvantage that a user must explicitly provide the preference data to be used for filtering media content.

In other systems known in the prior art, content selection is performed based on criteria that are not explicitly provided by the user. U.S. Patent 6,718,551 by Swix et al. describes a system whereby prior subscriber choices are collected and analyzed to select advertisements intended to appeal to the subscriber. U.S. Patent Application 2004/0005900 describes a software application, provided in conjunction with a video program and executing on a mobile terminal, which uses previously-entered information to customize the application interface when viewing the video content.

Another feature of modern media systems is the ability to provide supplementary content during the playout of primary media content. Such supplementary content may take the form of images, text, web pages, audio, video, multimedia, or an interactive application. For example, when a song is purchased from the Apple iTunes Store for playout on the Apple iPhone®, an image of the album cover is also downloaded for display when the song is played. Similarly, U.S. Patent Application 2006/0031825 by Mulligan describes a radio broadcast system that utilizes a second communication channel to provide interactive functionality related to the primary broadcast audio content.

Other systems describe the use of preference data to select secondary content supplied with primary media content. For example, U.S. Patent 6,601,103 by Iki et al. describes a broadcast system wherein the primary media content is augmented with supplemental programming, and the presentation of the supplementary content is based on individual preferences of the user of the system. U.S. Patent 7,114,170 by Harris et al. describes a method for providing interactive content based on user preferences. U.S. Patent Application 2008/0119132 by Rao incorporates user preference into a system by relaying user choices to a media distribution server that provides both primary and supplementary media content appropriate to the user's preferences. In each of these systems known in the prior art, preference data must be explicitly provided by the user.

The provision of user profile data is a critical issue in any system that performs filtering or selection based on user preference. In prior art systems, filtering criteria are either based on explicit user specification, or on previous usage history. In the former case, provision of sufficiently sophisticated and diagnostic filtering criteria places a great burden on the user, requiring substantial time and effort to indicate preference choices. Furthermore, the quality of the resulting data depends on the quality of preference questions and choices presented to the user. Conversely, in the latter case, the quality of data is limited by the finite interaction history of the user with the specific system, which may not be representative of other areas of choice or interest in a more general media context. For example, if a user buys audio content from both Apple iTunes Store and Rhapsody Music Service®, neither on-line service will have the purchasing history of the other store for use in targeted advertising.

What is required is a system for personalizing supplementary content provided in conjunction with primary media content, so that the supplementary content is relevant to the interests and preferences of the user, without requiring the user to undergo lengthy specification of preference choices.

### SUMMARY OF THE INVENTION

The present invention provides methods and systems for providing supplementary content to the user of a media player capable of storing or accessing media content, wherein the supplementary content is filtered at least in part based on the inventory of media content accessible to the player.

The system includes a program operable on a media player to generate a request for supplementary content responsive to a selection by a user of one or more of available media content stored on or accessible to the media player. A filter module is operable on the supplementary content generated responsive to the request to create a filtered subset of the supplementary content. The filter module is further operable to create the filtered subset in consideration of the available media content stored on or accessible to the media player. The subset of supplementary content is then presented to the user at the media player.

The method for providing supplementary content operates in conjunction with a media player having stored thereon, or access to, available media content. The method includes generating a request for supplementary content related to at least one of the available media content stored on or accessible to the media player. The supplementary content is further processed in view of the available media content on the media player. Finally, the processed supplementary content is presented (e.g. displayed) to the user at the media player.

In accordance with further aspects of the invention, the supplementary content is displayed while the media player is playing media content.

In accordance with still further aspects of the invention, media content includes at least one of audio content, video content, and multimedia content.

In accordance with still further aspects of the invention, supplementary content includes at least one of textual content, still image content, Internet web page address content, audio content, video content, multimedia content, and interactive content.

In accordance with still further aspects of the invention, the media player plays stored media content.

In accordance with still further aspects of the invention, the media player plays non-stored media content received from an external server of media content.

In accordance with still further aspects of the invention, media content may be accessible to the media player by virtue of being stored in the media player.

In accordance with still further aspects of the invention, media content may be accessible to the media player by virtue of being stored in a store external to and accessible to the media player.

In accordance with still further aspects of the invention, media content may be accessible to the media player by virtue of media rights access data stored in the media player, said media rights access data providing rights to access media content stored in the media player or stored in and accessible through an external media server.

In accordance with still further aspects of the invention, the filtering operation is performed at least in part within the media player.

### BRIEF DESCRIPTION OF THE DRAWINGS

The preferred and alternative embodiments of the present invention are described in detail below with reference to the following drawings.

FIG. 1 is a schematic diagram of an exemplary media player operative to implement features of the invention;

FIG. 2 depicts the elements of the inventive system;

FIG. 3 is a flowchart of an exemplary method for providing supplementary content to a media player;

FIG. 4 shows an exemplary filtering operation using the inventive method;

FIG. 5 shows a second exemplary filtering operation using the inventive method; and

FIG. 6 shows a third exemplary filtering operation using the inventive method.

### DETAILED DESCRIPTION OF THE INVENTION

By way of overview, embodiments of the present invention provide a method and system for providing supplementary content to the user of a media player, wherein the supplementary content is filtered at least in part by the inventory of media content accessible to the player.

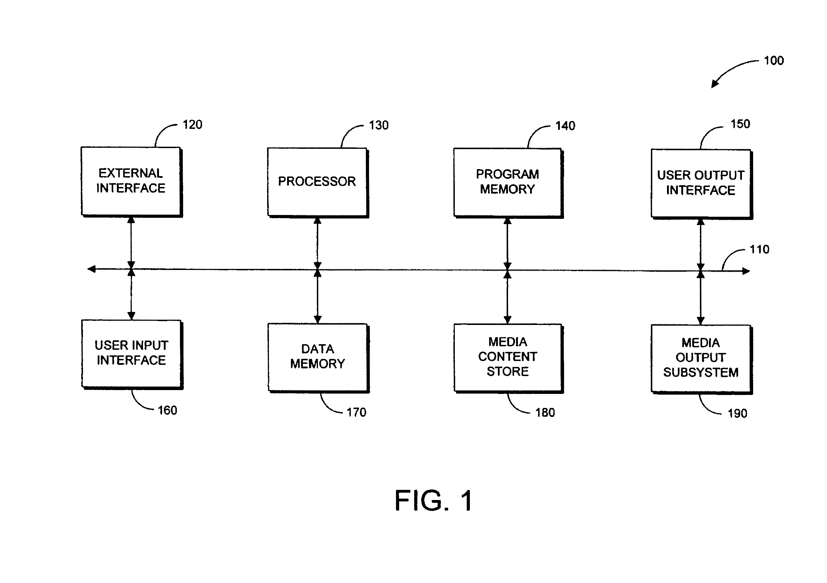

FIG. 1 shows a schematic diagram of the components which comprise an exemplary media player configured for use with the inventive method and system. Media player 100 incorporates a bus 110 that interconnects the various sub-systems of the media player. A subsystem 120 provides an external interface through which external systems and devices can communicate and interchange data and media content with the media player. A processor 130 controls the general operation of the media player and performs specialized functions as required including communication, decoding and display. A program memory 140 contains instructions for processor 130 to control the operation of the processor and other subsystems. A user output interface 150 provides feedback to the user as to the status of internal and external operations of the media player. User output interface 150 also displays interactive content as appropriate. A user input interface 160 accepts input from a user to control the operation of the media player. A data memory 170 provides storage for permanent and transient data required for the operation of the media player. A media content store 180 provides storage for media content. A media output subsystem 190 provides for output during the playing of media content.

The Apple iPhone is an example of a media player suitable for use in the inventive method and system. In the iPhone, external interface 120 is accomplished by a radio-frequency transceiver supporting digital telephony, and a wireless network interface supporting the 802.11g or similar protocol. Processor 130 is an ARM processor capable of the execution of general instruction codes. Program memory 140 is a combination of RAM and ROM configured for storage of resident and transient application program code. User output interface 150 is a graphics screen, which is touch sensitive and also serves as user input interface 160. Data memory 170 comprises RAM and ROM for storage of operational data, while media content store 180 comprises flash RAM for the storage of audio and video clips. Finally, media output subsystem 190 comprises specialized audio decode hardware, amplifier and speakers for audio processing and output, along with video output displayed on the touch screen. The features of the iPhone herein described are not intended to be a limiting description of the inventive system, but are included only for illustrative purposes.

Notwithstanding the previous description of the iPhone, one skilled in the art will recognize that the various elements of media player 100 can be realized through a variety of means. For example, bus 110 may be a single bus or a series of discrete buses, each of which support a different communication protocol for conveying data between the various subsystems of the media player. External interface 120 may be realized as a wired interface such as USB or Ethernet, or by a wireless protocol such as 802.11g, or through multiple such physical interfaces. Processor 130 may be a singular device, or may be realized in a combination of generalized and specialized processors. Program memory 140, data memory 150, and media content storage 180 may be realized as a combination of RAM and ROM memory, including flash, and may be separate or combined memory systems. User input interface 160 may be a touchscreen, a numeric keypad, a rocker switch, or a combination of these and other hardware interface elements known in the prior art. Media content store 180 may be provided by solid-state, magnetic, optical, opto-magnetic, or other storage devices, and may be integral to the media player 100 or external to the media player and connected to the system bus 110 through an interface (not shown). Alternatively, media content store 180 could store media access rights data which afford access to primary media content stored at a central server or other facility.

Media output subsystem 190 may include special-purpose decoding hardware, amplifiers, device drivers, and output devices capable of displaying audio, video or other content to the user. User output interface 150, user input interface 160, and media output subsystem 190 may share some or all of the same physical hardware. Any or all combinations of such features, as well as others known in the art, may comprise a media player without departing from the spirit and scope of the inventive method and system.

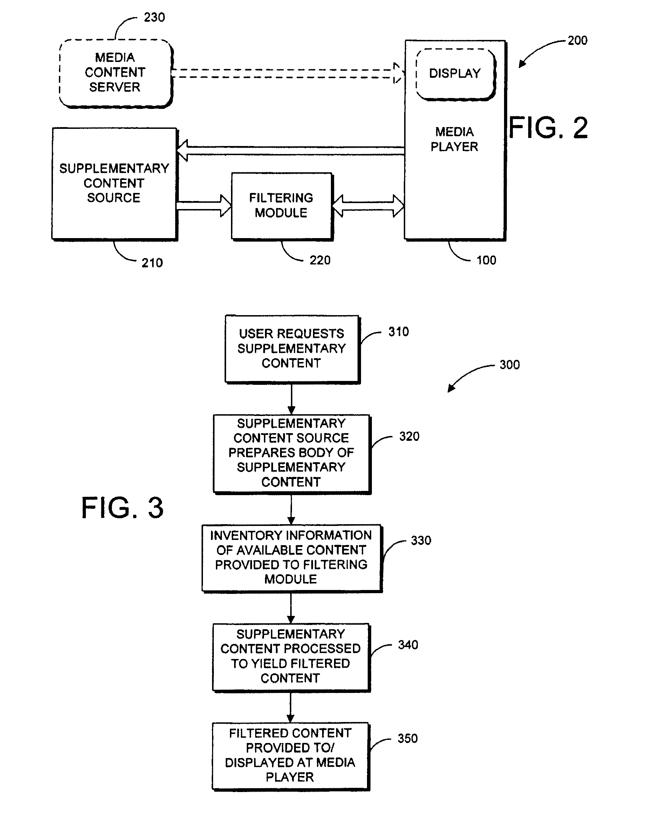

FIG. 2 depicts the elements of the inventive system. A system 200 for providing supplementary content to the user of a media player 100 includes a source of supplementary content 210 to which the media player makes a request for supplementary content. The supplementary content is then passed to a filtering module 220 which selects or modifies elements of the supplementary content, before providing the filtered supplementary content for display at the media player. As will be appreciated from a description of different exemplary embodiments, the filtering module 220 acts to process supplementary content from source 210 at least in part in view of the available media content on the media player 100. The filtering module 220 can be fully operable within the media player, partially operable within the media player and within some external networked device, or fully external to the media player so that the supplementary content received at the media player is fully personalized to the user and stripped of redundant information. As information is provided to the filtering module regarding the inventory of media content accessible to the media player, and the inventory information is used in the filtering operation, it may be preferable that the filtering module processing the supplementary content in view of the available media content be operable within the secure confines of user-owned equipment (e.g. the media player 100 itself and/or a personal media server 230) rather than at external supplementary content source 210. The supplementary content is passed to the media player or personal media server, where the supplementary content may be stored. The supplementary content may also be displayed with or without the concurrent playout of media content which may be stored media content from the media player or non-stored media content received from a media content server 230.

FIG. 3 depicts a flowchart 300 of an exemplary method for providing supplementary content to a media player. At a step 310, a user requests supplementary content. The request may be automatically generated at the media player responsive to certain designated actions by the user. For example, the action may be a selection of one or more of the items from the available media content of the media device 100. Selection may occur by, for example, a play request of the item(s), a mouse-over during browsing, a scroll-over, etc. A selection triggers an application running on the media device to initiate a request for supplementary content via various means discussed further below. The request is then transmitted to the supplementary content source, or some third party that triggers a further request from the source, as via an HTTP GET message transmitted over a wide area network such as the Internet. The request can include various types of information such as user ID, media item played, artist, as well as information about the available media content on the media player such as the general types of songs included, and even the inventory itself.

At a further step 320, a supplementary content source prepares a body of supplementary content. The supplementary content is typically related to at least one of the available media content stored on or accessible to the media player. In one example, the selection of one song for play on the media player would trigger the generation of a list of all songs by that same artist. In another example, the selection of that same song may result in a return list of songs that more closely match the type of content on the media player.

At a further step 330, a filtering module obtains information about the inventory of media content accessible to the media player. The information about the inventory may consist of a list of some or all of the media items accessible to the media player, and may include dates of acquisition of any or all of such media items. The information about the inventory may consist of a list of some or all of the creators of the media items accessible to the media player, and may include information regarding the number, size, and/or type of accessible media items created by each such creator. The information about the inventory may be generated before or after the request for supplementary information. The information about the inventory may be incorporated in part or in total within the request for supplementary content, and may be provided in part or in total directly to the filtering module.

At a further step 340, the filtering module filters the body of supplementary content, wherein the filtering operation is based at least in part on the inventory of media content accessible to the media player. One exemplary filtering operation removes items from a list of media content available for purchase, so that a user is not be presented with a list of content for purchase that includes items which the user already owns and has stored on his media device. These redundant content items are removed from the list by the exemplary filtering operation before presentation of the list to the user via the user interface.

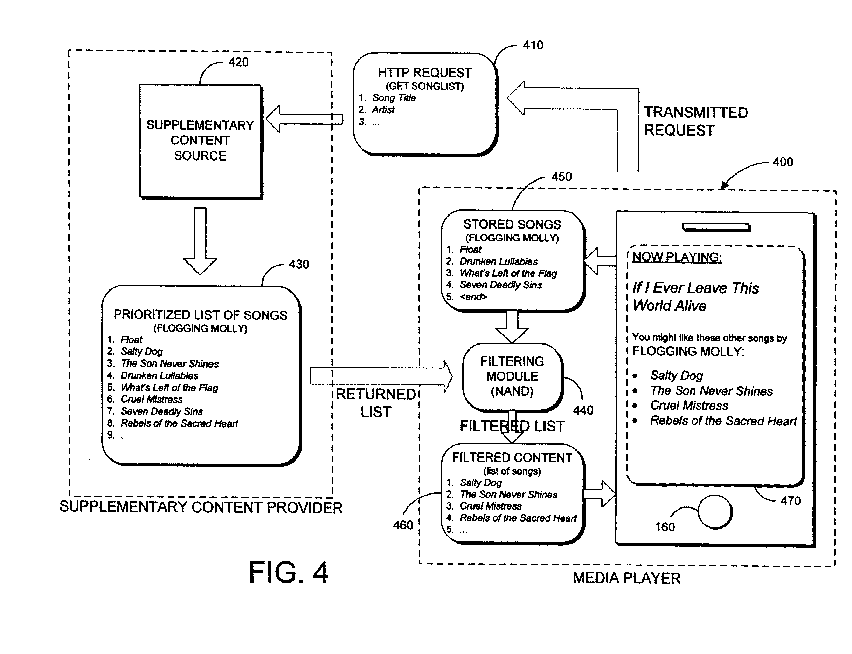

At a further step 350, the filtered body of supplementary content is provided to the media player. The supplementary content can then be stored at and/or displayed at the media player in conjunction with selection of the media item. In one example, described below with reference to FIG. 4, a user selects a stored MPEG-1 Audio Layer-3 (mp3) file for play at the media player. Supplementary content is provided to the media player that includes a list of songs from that same artist that are not currently stored on or accessible to the media player but can be downloaded via a music purchase service. The list of songs can be displayed simultaneously as the user is listening to the selected mp3 file so that the user is provided with helpful information that is relevant to the activity that the user is currently undertaking. In this example, one advantage is that the user is more likely to purchase a song while they are enjoying a related song (for example, by the same artist).

The steps of exemplary method 300 may be performed in other sequences or combined where appropriate without departing from the spirit and scope of the inventive method. For example, the initial request for supplementary content may include information regarding the inventory of media accessible to the media player. The filtering operation may be carried out as a series of filtering sub-operations. Some or all of the filtering may be carried out within the source of supplementary content based on information contained within the request for supplementary content. Some or all of the filtering may be carried out within the media player, so that knowledge of the inventory of media content accessible to the media player need not be transmitted outside the media player to accomplish the inventive method.

FIG. 4 shows an example of a filtering operation utilizing the features of the inventive method and system. A user selects the audio selection "If I Ever Leave This World Alive" by the musical group Flogging Molly on a media playout device 400. When the user presses the play button, the media playout device generates a request for supplementary content 410. The request can be formulated as a Hypertext Transfer Protocol (HTTP) GET message to a web server. The message in the example comprises a URL prefix "http://www.contentserver.com/songlist?" which signals to the supplementary content source that a list of song titles is requested. The remainder of the GET message content signals the name of the audio selection being played and the artist of the selection so that the HTTP GET message takes the form as follows:

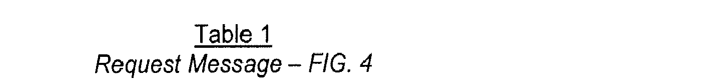

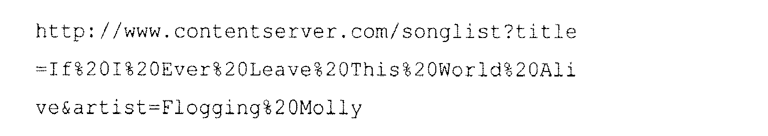

Using wireless network connectivity built into the media playout device, the GET request is forwarded via HTTP to the supplementary content source 420. The supplementary content source reads the content of the GET message and generates an ordered list 430 of songs by Flogging Molly. In this example, the sorting order corresponds to the cumulative number of times the particular selection has been referenced in all the similar HTTP messages received by the supplementary content source. In another example, the priority order can be determined, for example, by the cumulative number of downloads, or current relative popularity of the songs according to third party lists such as on servers operated by Billboard magazine. Such a priority ordering takes into account the well-known tendency of a consumer to preferentially purchase items which are known to be popular among other consumers. The content of the list may be further conditioned on the identity of the device owner and any history of prior interaction or purchase available at the supplementary content source.

The ordered list of songs is returned to the media player as a response to the HTTP GET message. The list is forwarded to a filtering module 440 contained within the media player. The filtering module also obtains a list 450 of songs performed by Flogging Molly and stored in the media player. The filtering module 440 compares the two lists and creates a filtered list 460 of songs that are not stored in the media player, e.g. using a NAND operator. Note, for instance, that the sorted list 430 includes the first-named item *Float* and the fourth-named item *Drunken Lullabies.* Both of these items are already stored on media player 400 and included within list 450. The NAND filtering module 440 thus eliminates these redundant items from the filtered list 460 ultimately presented to the user at the media player. The filtered list of songs is used in an interactive display 470, prompting the user to purchase additional songs by Flogging Molly. Notably, the displayed list does not include songs already stored in the media player.

In the foregoing example, other communication protocols known in the prior art or specifically developed for this purpose could be employed as an alternative to the HTTP GET message. For example, SOAP (Simple Object Access Protocol) or a similar protocol could be used to exchange Extensible Markup Language (XML) documents containing equivalent contents to those described above for the HTTP GET message and response. Alternatively, a plain-text protocol such as SNMP (Simple Network Message Protocol) could be used to exchange textual content in a pre-defined format between the media player and the supplementary content source. In yet another alternative, a binary interface standard such as the COM (Microsoft Windows Component Object Model), CORBA (Common Object Request Broker Architecture), or JavaBeans protocol could be used to exchange such content. In yet a further alternative, a custom data interface protocol could be defined explicitly for the purpose of implementing the current invention.

In the example displayed in FIG. 4, the filtering module 440 is entirely contained within the media player 400, so that knowledge of the inventory of stored songs is not provided to an external agent when performing the filtering step of the inventive method.

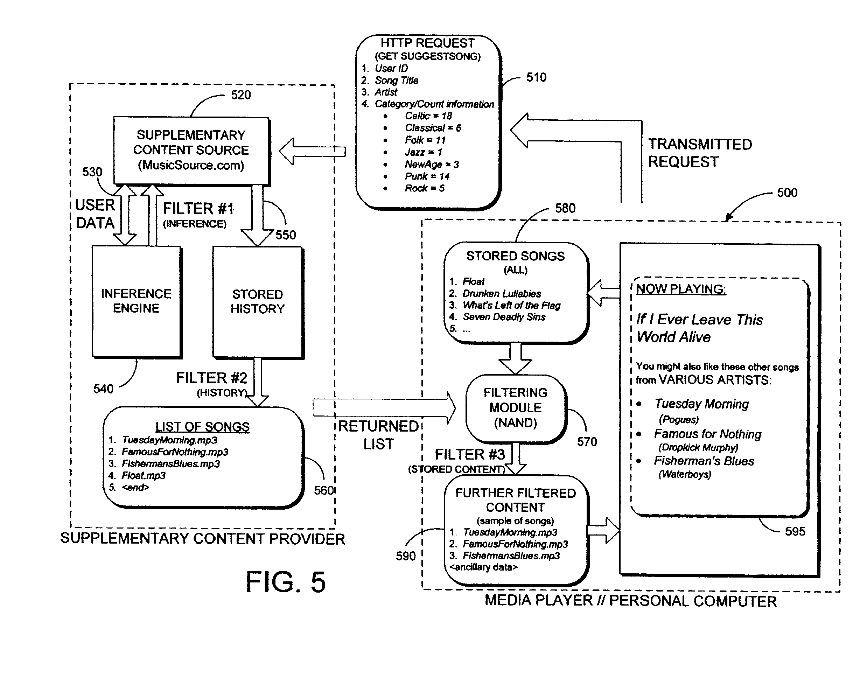

In the foregoing example, the supplementary content consisted of a textual list of additional songs available for purchase. Other types of supplementary content could be provided within the scope of this invention. For example, in addition to the textual list of songs, thumbnail images could be provided of the album covers for those songs. Alternatively, the list could comprise a set of Universal Resource Locators (URLs) that could be used by a browser application on the media player to display web pages in an on-line retail environment related to the songs available for purchase. As yet another alternative, FIG. 5 depicts an exemplary circumstance where the supplementary content includes audio content related to the media selection currently playing on the media player.

FIG. 5 shows a second example of a filtering operation utilizing the features of the inventive system. Summer W. is using her personal computer 500 to listen to her music collection and shop for new musical selections. As Summer W. listens to a song from her collection, her musical playout application creates an HTTP GET message 510 to forward to a web-based supplementary content source 520. The HTTP message comprises a prefix "http://www.musicsource.com/suggestsong?" that signals to the supplementary content source MusicSource.com to generate a set of suggested audio tracks for purchase. The remainder of the HTTP message includes a series of "name=value" pairs that provide data for the supplementary content source to use when filtering the list of suggested tracks. The HTTP message includes the name of the user, the name of the current audio selection being played, the artist of the selection, and a set of category and count values that indicate how many audio files of each category are currently stored in Summer W.'s computer. The exemplary message takes the following form:

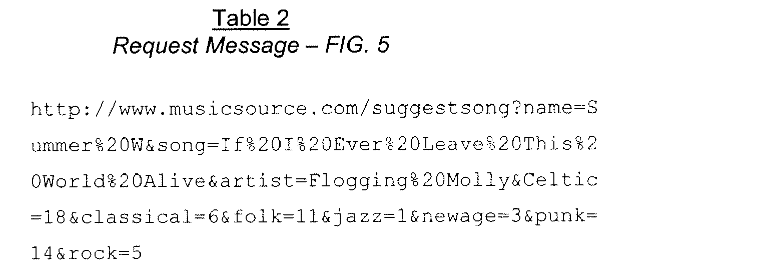

In this example, the supplementary content source 520 at MusicSource.com passes inference data 530 comprising the song name, song artist, and category and count information to an inference engine 540 that evaluates the distribution of content among the various categories and infers what songs might be of maximal interest. The inference engine examines the various categories and determines that categories "Celtic", "folk" and "punk" are relatively highly populated, and infers that the user has an interest in contemporary Celtic punk and folk music. The inference engine filters the list of all songs known to the inference engine to generate a list of songs 550 matching these categories and forwards the list to the supplementary content source. The supplementary content source uses the identity of the user to examine any stored transaction history at MusicSource.com to eliminate from the list songs which Summer W. has already purchased. Note that this step of filtering does not meet the criterion of the current invention, since purchased songs are not necessarily stored on or accessible to the media player; however, this filtering step does eliminate redundant purchases from the list presented to the media player.

The supplementary content source then selects the most popular four songs on the filtered list and prepares a response packet 560 that includes short audio snippets of these songs, along with identifying data and purchase information. For example, this supplementary content may include mp3 compressed audio files of the songs "Tuesday Morning" by the Pogues, "Famous for Nothing" by Dropkick Murphy, "Fisherman's Blues" by the Waterboys, and "Float" by Flogging Molly, which are all Celtic punk rock songs that have been inferred to match Summer W.'s musical tastes.

Since Summer W. may have acquired songs from sources other than MusicSource.com, the musical playout application executing on her personal computer compares the list 560 of songs in the response packet with the inventory 580 of songs on Summer W.'s computer (e.g. via filtering module 570) to further eliminate any redundant songs from the response packet as via a NAND operation. The further filtered content results in a list 590 of sample songs where one item, the song *Float,* has been eliminated from the list of four songs identified by the supplementary content provider at 560. The musical playout application then interactively displays the selections from the list 590 on the display 595 of the personal computer, allowing Summer W. to listen to and purchase any or all of the selections. In this example, information about the inventory of audio stored on the media playout device has been used in two separate filtering steps, first at the inference engine 540, and then within the media playout device 500.

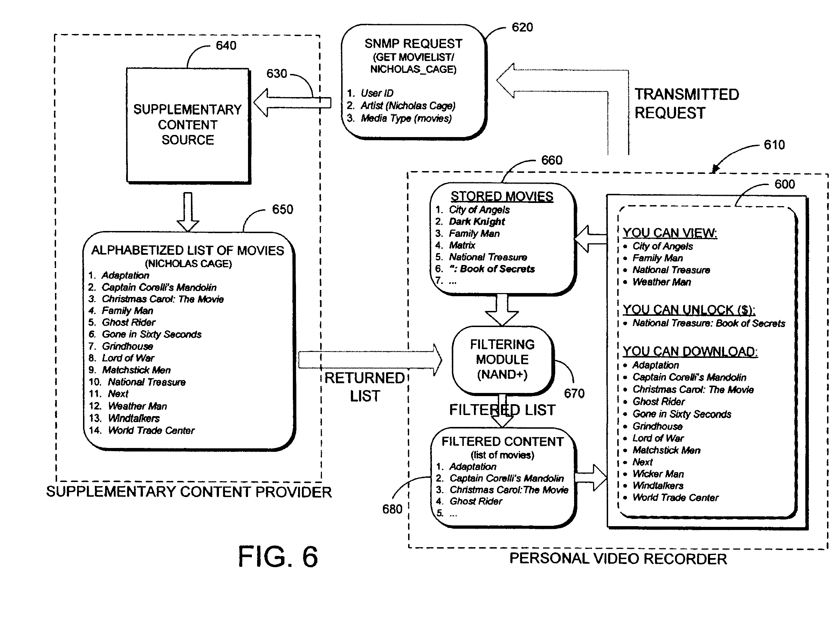

FIG. 6 shows another exemplary system configured to operate with the current invention. A viewer 600 is using a personal video recorder (PVR) 610, on which are stored a number of movies. Movies stored on such a PVR can be obtained from a number of sources, including recording from over-the-air, satellite or cable broadcast; copying from a DVD; or by received content pushed onto the PVR from a network such as cable or wireless broadband. In the latter case, the content is commonly encrypted so that the user of the PVR cannot access the content without acquiring appropriate rights through a digital rights management (DRM) system.

In this example, the viewer enjoys watching movies staring the actor Nicholas Cage, so in response to viewer action, an application executing on the PVR constructs a Simple Network Message Protocol (SNMP) packet 620 and transmits it via Plain Old Telephone Service (POTS) 630 to a supplementary content source 640, requesting a list of movies in which Nicholas Cage appears. The supplementary content source prepares an XML document 650 containing a list of movie titles in which Nicholas Cage is an actor, and returns the list to the PVR. The XML document can take the following form:

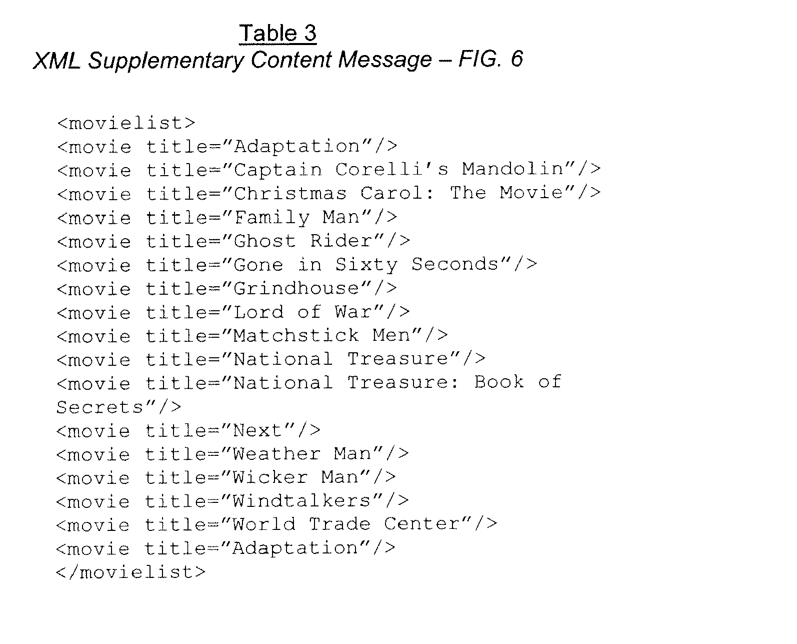

The list may include additional information (not shown) such as a synopsis of the plot of the movie, director's name, release date, length, Motion Picture Association of America (MPAA) rating, list of actor's names, and so forth. The movie list 650 is then filtered based on the list 660 of movies stored in the PVR. As pictured, the list includes some movies (denoted by bold-italicized type) which are stored on the device but not currently accessible to the viewer, in this case the titles "Dark Night" and "National Treasure: Book of Secrets". The list 660 of stored movies also includes movies that do not include the object of the search, Nicholas Cage. In this example, the list 650 can be filtered via filtering module 670 in multiple ways, based on the list of content stored in the PVR.

In one alternative, the viewer can be presented with a filtered list of movies currently accessible on the PVR (in this case, the titles "City of Angels", "Family Man", "National Treasure", and "Weather Man"). Any of the titles on this list are available for immediate viewing. These are shown to the viewer at the display 600 as items "YOU CAN VIEW."

In a second alternative, the viewer can be presented with a filtered list of movies accessible on the PVR but currently locked (in this case, the title "National Treasure: Book of Secrets"). In order for the viewer to access this title, the viewer would first have to acquire the appropriate DRM code through a purchase interaction with the content supplier. Any titles in this category could be available for viewing after a brief interval for the purchase transaction. These are shown to the viewer at the display 600 as items "YOU CAN UNLOCK ($)."

In a third alternative, the viewer can be presented with a filtered list of movies that are not immediately accessible to the PVR but which could be purchased and downloaded for future viewing (in this case, the titles "Adaptation", "Captain Corelli's Mandolin", "Christmas Carol: The Movie", "Ghost Rider", "Gone in Sixty Seconds", "Grindhouse", "Lord of War", "Matchstick Men", "Next", "Wicker Man", "Windtalkers", and "World Trade Center"). Any titles in this category could be available for viewing only after a prolonged period necessary for downloading the movie content. Additional supplementary information such as plot synopsis could be presented to the viewer to assist with a purchasing decision. These are shown to the viewer at the display 600 as items "YOU CAN DOWNLOAD."

The exemplary filtering methods depicted in FIGS. 4, 5, and 6 are not intended to be limiting descriptions of the inventive method and system, but are provided for illustrative purposes only. As will be apparent to one skilled in the art, alternative methods of generating supplementary content and of filtering said supplementary content are within the spirit and scope of the inventive method and system.

Aspects of any of the examples described above may be combined with aspects of any of the other examples described to form further examples without losing the effect sought.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

Accordingly, the invention also includes further embodiments wherein the generated request for supplementary information may include information regarding an inventory of the available media content, wherein the ordered list may be ordered based on a popularity of content items listed in the ordered list, wherein the selection of the one or more available media content may be a play request of the selection at the media player, wherein the selected one or more available media content may be played simultaneous with display of the processed supplementary content, wherein the request generated by the program operable on the media player may include data associated with the available media content selected, and wherein the data may include one or more from the group selected from title, artist, composer, and user ID.

## Claims

1. A method for providing supplementary content to a media player having stored thereon, or access to, available media content, the method comprising:
generating a request for supplementary content related to at least one of the available media content stored on or accessible to the media player;
processing the supplementary content in view of the available media content on the media player; and
displaying the processed supplementary content at the media player.

2. The method of claim 1, wherein the available media content comprises at least one of audio content, video content, and multimedia content, and wherein said supplementary content comprises at least one of textual content, still image content, an Internet web page address, audio content, video content, multimedia content, and interactive content.

3. The method of claim 1 or 2, further including:
receiving the supplementary content at the media player, wherein at least part of the processing of the supplementary content is performed on the media player.

4. The method of claim 3, wherein the supplementary content received at the media player is an ordered list of content items related to at least one of the available media content, and wherein the processing step includes filtering the ordered list to eliminate the content items that match with available media content stored on or accessible to the media player, wherein the processed supplementary content is a subset of the ordered list.

5. The method of claim 1, further including:
receiving the request for supplementary content from the media player over a network;
responsive to receipt of the request for supplementary content, generating a body of supplementary content;
filtering the body of supplementary content based at least in part on the available media content to result in a filtered body of supplementary content; and displaying the filtered body of supplementary content at the media player.

6. The method of any preceding claim, wherein the request for supplementary content is generated responsive to a selection by a user of one or more available media content.

7. The method of claim 6, further including the step of playing the selected one or more available media content simultaneous with display of the processed supplementary content, wherein the selection of the one or more available media content is a play request of the selection at the media player.

8. The method of claim 6, wherein the step of generating the request for supplementary content includes generating an HTTP GET message at the media player that includes at least one or more of a user name, a name of the selection of available media content, an artist of the selection, a count value of media content types by category of the available media content, and a list of favorites.

9. The method of any of claims 6 to 8, wherein the body of supplementary content is a list, the method further including:
sorting items within the list to provide a sorted list;
filtering the sorted list of supplementary content based at least in part on the available media content to result in a filtered list of supplementary content;
allowing selection of one or more items from the filtered list; and
responsive to the selection of the one or more items from the filtered list, making the one or more items available to the media player by downloading the item or unlocking rights to the item already stored on the media player.

10. The method of any of claims 6 to 9, further including:
inferring the supplementary content from information within the received request; and
receiving the supplementary content at the media player, wherein at least part of the processing of the supplementary content is performed on the media player.

11. A system for providing supplementary content to a media player responsive to a request from said media player for said supplementary content, comprising:
a program operable on a media player to generate a request for supplementary content responsive to a selection by a user of one or more of available media content stored on or accessible to the media player;
a filter module operable on the supplementary content generated responsive to the request to create a filtered subset of the supplementary content, said filter module further operable to create the filtered subset in consideration of the available media content stored on or accessible to the media player; and
means for displaying the subset of supplementary content at the media player.

12. The system of claim 11, further including:
a supplementary content generator for generating a list of supplementary content responsive to receipt over a network of a request for supplementary content from the media player; and
a supplementary content source having stored thereon, or access to, supplementary content referenced in the list; and
means for communicating the list and the supplementary content to the media player.

13. The system of claim 11 or 12, wherein said filter module is implemented as a software application executing on a computing device and wherein at least a portion of said filter module is implemented within said media player.

14. The system of any of claims 11 to 13, wherein the available media content comprises at least one of audio content, video content, and multimedia content, and wherein said supplementary content comprises at least one of textual content, still image content, an Internet web page address, audio content, video content, multimedia content, and interactive content.

15. The system of any of claims 11 to 14, wherein the request generated by the program operable on the media player includes data associated with the available media content selected, and wherein the data includes one or more from the group selected from title, artist, composer, and user ID.

## Amended claims

### Amended claims in accordance with Rule 137(2) EPC.

1. A method for providing supplementary content to a media player having stored thereon, or access to, available media content, the method **characterized by**:
generating a request for supplementary content related to at least one item of the available media content stored on or accessible to the media player;
responsive to receipt of the request for supplementary content, generating supplementary content;
filtering the supplementary content on the media player to eliminate therefrom content that matches available media content stored on or accessible to the media player; and
displaying the filtered supplementary content at the media player.

2. The method of claim 1, wherein the available media content comprises at least one of audio content, video content, and multimedia content, and wherein the supplementary content comprises at least one of textual content, still image content, an Internet web page address, audio content, video content, multimedia content, and interactive content.

3. The method of claim 1 or 2, further including:
receiving the supplementary content at the media player, wherein the supplementary content received at the media player is a list of content items related to at least one item of the available media content, such that after the list is filtered to eliminate the content items that match with available media content stored on or accessible to the media player, the filtered supplementary content is a subset of the list.

4. The method of any preceding claim, further including:
receiving the request for supplementary content from the media player over a network.

5. The method of any preceding claim, wherein the request for supplementary content is generated responsive to a selection by a user of one or more items of available media content.

6. The method of claim 5, further including the step of playing the selected one or more items of available media content simultaneous with display of the filtered supplementary content, wherein the selection of the one or more items of available media content is a play request of the selection at the media player.

7. The method of claim 5, wherein the step of generating the request for supplementary content includes generating an HTTP GET message at the media player that includes at least one or more of a user name, a name of the selection of available media content, an artist of the selection, a count value of media content types by category of media content, and a list of favorites.

8. The method of any of claims 5 to 7, wherein the supplementary content is a list and the method further includes:
sorting items within the list to provide a priority sorted list;
filtering the priority sorted list of supplementary content based at least in part on the available media content to result in a filtered list of supplementary content;
allowing selection of one or more items from the filtered list; and
responsive to the selection of the one or more items from the filtered list, making the one or more items available to the media player by downloading the one or more items or by unlocking rights to the one or more items already stored on the media player.

9. The method of any preceding claim, further including:
inferring the supplementary content from information within the received request.

10. A system for providing supplementary content to a media player responsive to a request from the media player for supplementary content, **characterized by**:
a program operable on the media player to generate a request for supplementary content responsive to a selection by a user of one or more items of available media content stored on or accessible to the media player;
a filter module operable on the media player to filter the supplementary content generated in response to the request and to eliminate from the supplementary content content that matches available media content stored on or accessible to the media player; and
means for displaying the subset of supplementary content at the media player.

11. The system of claim 10, further including:
a supplementary content generator for generating a list of supplementary content in response to receipt over a network of a request for supplementary content from the media player; and
a supplementary content source having stored thereon, or access to, supplementary content referenced in the list; and
means for communicating the list and the supplementary content to the media player.

12. The system of claims 10 or 11, wherein the available media content comprises at least one of audio content, video content, and multimedia content, and wherein the supplementary content comprises at least one of textual content, still image content, an Internet web page address, audio content, video content, multimedia content, and interactive content.

13. The system of any of claims 10 to 12, wherein the request generated by the program operable on the media player includes data associated with the item of available media content selected, and wherein the data includes at least one of title, artist, composer, user ID, author, performer, producer, director, style, or genre.
